# EUROPEAN PATENT APPLICATION

(11) **EP 4 779 490 A1**
(43) Date of publication of application: **22.07.2026**
(21) Application number: 25152626.5
(22) Date of filing: 17.01.2025
(51) Int. Cl.: G06F 16/335, G06F 16/383, G06N 20/00

(54) **COMPUTER-IMPLEMENTED METHOD FOR RESPONDING TO A USER QUERY**

(71) Applicant: Parsias Ltd, Colchester Essex CO5 9AG (GB)
(72) Inventor: CONSIDINE, Seamus, Colchester, C05 9AG (GB); ANDALL, Hogarth, Colchester, C05 9AG (GB)
(74) Representative: Murgitroyd & Company

(57) **Abstract**

A method is described which utilises a platform to generate a response to a user query based on contextual information about the user and their information technology estate.

## Description

### FIELD

The invention relates to a method and system. Particularly, but not exclusively, the invention related to a method and system. Further particularly, but also not exclusively, the invention relates to a computer-implemented method for responding to a user query.

### BACKGROUND

The modern organization utilises many information technology assets. Monitoring those assets across jurisdictions and use cases presents a complex problem, especially against a backdrop of regulatory and legal changes and an expanding array or news sources and third party information generation.

This is no different where assets related to trained models (e.g. neural networks and large language models) are concerned. However, where these are concerned, there are specific regulatory and legal environments in which to work, and these can be different based on location, and also restrictions around use cases and the like which makes accurate notification of any problematic software or hardware important to be aware of.

Aspects and embodiments were conceived with the foregoing in mind.

### SUMMARY

Aspects relate to generating a response to a user query provided to a platform which is configured to obtain data about an information technology estate associated with the user and/or organisation which runs and/or implements the information technology estate.Viewed from a first aspect, there is provided a computer-implemented method of responding to a user query associated with an information technology estate. The information technology estate may comprise all of the software and/or hardware which is utilised and/or implemented by a user and/or organisation and/or a user associated with an organisation. The method may be implemented by a processing resource. The processing resource may be software or hardware implemented and may comprise one or more processing elements which can provide processing and/or computing capacity.

The method may comprise providing a user query platform. The user query platform may be a computing resource which is configured to communicate with one or more client devices in order to receive queries from those client devices and/or provide responses to those client devices. The client devices may be any computing device. The client devices may communicate with the user query platform using any suitable transmission medium such as, for example, the world-wide web. The user query platform may be partitioned to maintain a separation between elements of an information technology estate associated with a first user and a second user. A user or organisation may have a user profile registered on the user query platform. The user profile may associate user data (e.g. name, contact details, authentication credentials) and/or organisation data (e.g. name, contact details, authentication credentials) with the user query platform to enable the respective user or organisation to interact with the platform.

The user query platform may be configured to provide a database module. The database module may comprise one or more of a vector database and/or a graph database. The database module may be configured to identify relationships between the elements of the information technology estate associated with the user estate and a content repository which provides access to content.

The method may comprise receiving a user query associated with at least one element of the information technology estate. The user query may identify an activity associated with the at least one element of the information technology estate. The user query may comprise data indicating one or more geographical and legal territories, applications associated with the at least one elements, information associated with a user of the at least one element of information technology estate and or use-cases which may be implemented using the at least one element of the information technology estate. The user query may be processed by a user query interface. The user query may be processed using a large language model to extract data from the query.

The method may comprise processing the user query to extract a query data set and a context data set. This may comprise the application of a large language model to extract the query data set and the context data set. Prompt engineering may be used to refine the user query prior to further processing.

The method may comprise querying the database module to identify content relevant to the query, wherein the query data set and the context data set are used to search the database to obtain a first content set. The database may be a graph database comprising one or more nodes and vertices which link external content sources to elements of the information technology estate.

The method may comprise processing the user query to identify the semantic meaning of the query. This may comprise applying techniques of natural language processing and one or more large language models to identify the semantic meaning of the query. Prompt engineering techniques may also process the user query in order to extract the semantic meaning of the query.

The method may comprise identifying a second content set based on the identified semantic meaning of the query. This may comprise providing a query to a vector database where the semantic meaning of the query is used to search the vector database.

The method may comprise generating a response based on the first and second content sets, where the response is generated using both user context information and the first and second content sets. The generation of the response may comprise the application of a large language model to generate the response, which may also use the first and second content sets. Prompt engineering techniques may be applied to the user query to generate a prompt to a large language model to request the response, using the first and second content sets as input.

A method in accordance with the first aspect provides a contextually accurate response to the user query in order to access information relating to the use, application or deployment of an information technology estate or an element of the information technology estate.

The response may invite a user validation input where the user can validate the response. User validation inputs may be processed to determine information and/or content which is missing from the database module. Responsive to such a determination, information and/or content which is missing from the database module may be added to the database module and associated with nodes and/or fields implemented by the database module.

The database may comprise a knowledge graph which associates the entities of the information technology estate with external content sources.

That is to say, the platform may be updated based on user responses. The platform may utilise a consensus mechanism to identify missing or inaccurate information and the platform adds or modifies the database module responsive to the identification of missing or inaccurate information.

Optionally, adding or modifying the database module responsive to the identification of missing or inaccurate information may comprise obtaining content associated with the missing or inaccurate information and associating the content with a missing field or node which is implemented by a database provided by the database module. The adding or modifying of the database module may comprise adding nodes and/or fields to one or more databases implemented by the database module and associating content with the added nodes and/or fields. The added nodes, fields and content can then be used in the generation of responses to future user queries.

Optionally, processing the user query to extract the query data set and the context data set may comprise using a large language model to parse the user query. Parsing the user query may comprise the application of prompt engineering techniques to improve the user query to improve the chances of the response being accurate and/or up to date.

The query data set may comprise data related to at least one or more of a:
- use case; or
- element of an information technology estate.

The context data set may comprise data related to at least one of a:
- Geographic territory (e.g. a country such as USA, Europe or Canada).
- Legal Territory (e.g. European Union)

The generation of the response may comprise forming a content corpus which is formed by:
filtering the first content list and the second content list based on the context data set;
using a large language model to generate the content corpus based on the filtered context list.

Optionally, processing the user query to identify the semantic meaning of the query may comprise:
- converting the query to a multi-dimensional vector using an LLM.

Optionally, the method may further comprise one or more of scanning the information technology estate to identify software or hardware being used to implement trained models (e.g. artificial neural networks and/or large language models); and/or storing information related to the identified software or hardware in association with the platform.

Optionally, the method may further comprise determining at least one change event associated with the identified software or hardware. The change event may comprise any change to the code, set-up, registries or execution of the software and/or hardware. The method may further comprise modifying the context corpus and/or the generated user response based on the at least one change event.

Optionally, scanning the information technology estate to identify software or hardware being used to implement trained models may comprise identifying the use of programming languages associated with the development and implementation of trained models. Examples of these programming languages include, but is not limited to, one of Python, Javascript, R, C++, C#, Java, Lisp, Julia, Haskell, Scala, and Go. Optionally, scanning the information technology estate to identify software or hardware may comprise scanning the information estate to identify the implementation of high risk behaviours.

Optionally, the scanning of the information technology estate may utilise a large language model.

A further aspect may provide a system comprising:
a processing device;
a memory device;
a processing medium configured to implement the method of the first aspect.

A further aspect may provide a computer readable medium comprising instructions which, when executed by a processing resource, implement the steps of the first aspect.

In various aspects, large language models may be used. Where large language models (LLMs) are used, they are trained using self-supervised learning techniques on content associated with the respective task.

Further aspects may provide a compliance management system comprising:a processor arranged to execute instructions; and/or a dual-database architecture comprising a knowledge graph database and a vector database; and/or a query processing module arranged to generate optimised queries; and/or a retrieval augmented generation module arranged to process queries and retrieve contextual information; and/or a result evaluation module arranged to validate outputs using multiple language models; and/or a continuous learning module arranged to modify system behaviour, wherein the system is arranged to process compliance queries through coordinated operation of the modules.

The query processing module may be arranged to perform one or more of the generation of between 0 and k (where k is an integer greater than 1) additional queries using a language model; and/or perform semantic analysis of user queries to establish context; and/or access historical query patterns from a query database, and/or combine the generated queries with historical patterns to create a set of k+1 queries.

The retrieval augmented generation module may be arranged to perform one or more of: extract entity relationships from queries and/or coordinate information flow between the knowledge graph and vector databases; and/or retrieve contextually relevant documents using trained heuristics, and/or synchronise updates across system components.

The retrieval augmented generation module may be further arranged to evaluate document relevance using trained heuristics; and/or remove less relevant documents based on scoring thresholds; and/or maintain minimum context requirements for remaining documents, and/or preserve contextual relationships between retained documents.

The result evaluation module may be arranged to compare outputs against stored gold standard responses; and/or process results through a different language model than used for generation; calculate confidence intervals for outputs and/or track and verify citation accuracy and/or identify new entity relationships from responses.

The continuous learning module may be arranged to analyse user queries and associated results and/or identify new entity types and relationships and/or update the knowledge graph based on learned patterns and/or maintain system stability during updates, and/or validate learning outcomes against benchmarks.

The knowledge graph database may be arranged to store metadata about entities and relationships and/or provide contextual links between documents; and/or update relationships based on usage patterns; and/or maintain relationship strength metrics, and/or synchronise with the vector database during updates.

The vector database may be arranged to store vectorised document representations and/or perform semantic similarity matching and/or maintain document fragment relationships and/or support context-aware searching and/or track document sources through processing stages.

The system may be arranged to generate user-specific query suggestions based on similar users' patterns; and/or provide "people like you" recommendations and/or adapt to user roles and contexts and/or maintain suggestion relevance through continuous evaluation.

The system may be arranged to maintain evaluation sets for consistency checking; and/or implement integrity protection mechanisms and/or verify citation accuracy in generated responses; and/or preserve system stability during learning cycles.

The system may be arranged to coordinate information flow between all components; and/or maintain consistency between processing stages; and/or track document lineage throughout processing and/or ensure synchronisation of all system elements.

The system may be arranged to perform periodic optimisation of stored relationships; and/or maintain system performance metrics and/or automatically incorporate new regulatory requirements; and/or validate system outputs against known-good states.

### DESCRIPTION

An embodiment will now be described, by way of example only, and with reference to the following drawings in which:
Figure 1 provides a schematic illustration of a platform configured to implement the embodiment;
Figure 2 provides a schematic illustration of a graph database used to relate the entities of the information technology estate to relevant risk factors for the monitoring of the use of the information technology estate; and
Figure 3 provides a flow of the steps of obtaining content associated with a request made in association with an information technology estate.

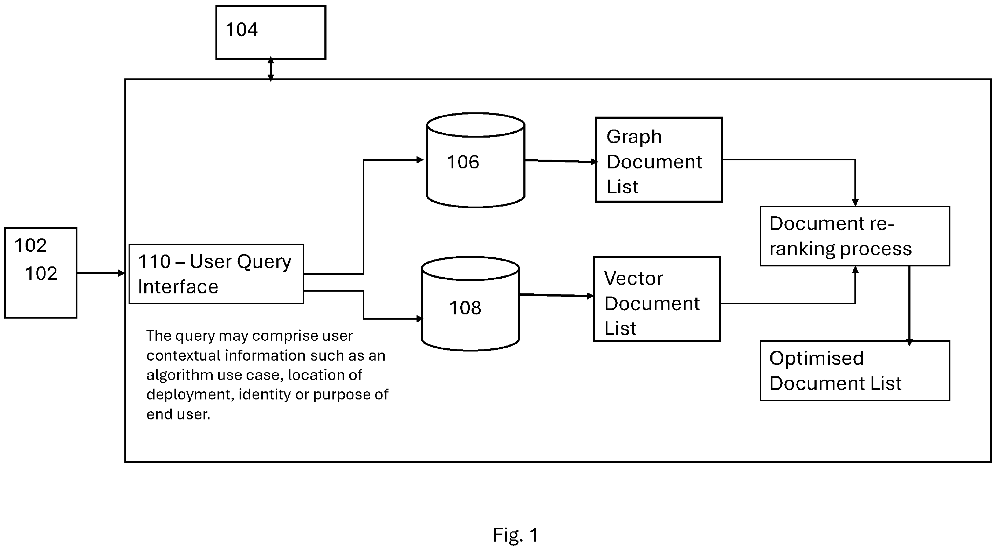

We now describe, with reference to Figures 1 to 3, a platform 100 which is configured to communicate with a client device 102.

The client device 102 is a computing device which is configured to generate queries to be provided to the platform 100. The client device 102 may be configured to run application program code to enable a user interface to be provided via which, queries are input by a user. The queries are transmitted to the platform 100 using any suitable telecommunications medium or protocol.

The platform 100 may be configured to scan an information technology estate 104 which is associated with a user and/or organisation. A profile may be registered on the platform 100 which associates the user and/or organisation with the platform 100. A user or organisation may registered the profile on the user query platform. The user profile may associate user data (e.g. name, contact details, authentication credentials) and/or organisation data (e.g. name, contact details, authentication credentials) with the platform 100 to enable the respective user or organisation to interact with the platform.

Standard authentication measures may be used to enable the user and/or organisation to access the platform. The term information technology estate describes all of the information technology assets which an organisation uses to support its operations. It may include tangible assets such as hardware and network infrastructure and intangible assets such as software applications and data. To scan the information technology estate, the platform may utilise application program code which is installed into the information technology estate (e.g. at the servers or on each terminal). The application program code may be described as an algorithm scanner. The information technology estate 104 may also include all application programming interfaces (APIs) and/or other information exchange modes of operation which enable external organisations and user to access the information technology estate or interact with the information technology estate.

The algorithm scanner scans the program code that it has saved in code version control repositories such as, for example, GitHub, GitLab, Bitbucket. The algorithm scans for the use of libraries and terms linked to machine learning (ML) or Large Language Models (LLMs). For example, it may search specifically for large language models (LLMs) and machine learning assets which are being implemented using a language such as, for example, Python, C++, R, Javascript, Java, Lisp, Julia, Haskell, Scala and Go. That is, the search may be trained on programming languages which are associated with the development and implementation of trained models, large language models and machine learning assets.

The algorithm scanner may also deploy a closed source LLM to scan the program code used by the information technology estate 104 to obtain an indication of the use of program code to implement ML or LLM activity. In other embodiments, the algorithm scanner may also be configured to scan the program code to obtain indications of the use of program code to implement other activities such as, for example, surveillance and/or biometric activities.

The basis of all code repositories is that they explicitly track code changes via timestamps, and it is possible to see specifically what has been added or amend since the last scan of an information technology estate 104. After the initial code scan of the information technology estate 104, we make use of timestamps and change events to only scan / re-assess those elements of the code that has been modified since the previous scan.

The algorithm scanner may assign an identification reference to each of the algorithms which are determined as being part of the implementation of ML or LLM activity as part of the information technology estate 104. The identification reference may be used to record the algorithm in a database used to store the algorithms which are part of the implementation of ML or LLM activity. This forms an algorithm register identifies the algorithmic processing and provides a centralised registry for the organisations AI activities. This provides transparency for those who are responsible for the information technology estate 104.

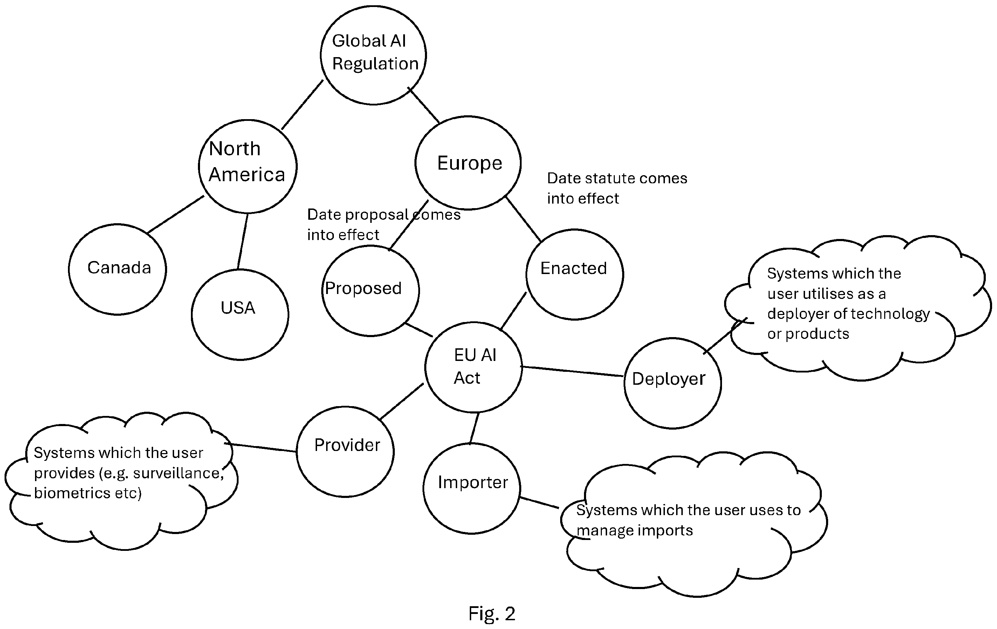

The platform 100 also provides a graph database 106 which is schematically illustrated in Figure 2. The graph database 106 is derived based on the database determined by the algorithm scanner and the related content sources (e.g. AI regulations) in addition to the organisations internal policies, standards and use cases for the identified algorithms. The platform 100 builds the graph database 106 based on the scan of the information technology estate 104. The graph database 106 is formed by the platform 100. The platform 100 is configured to initialise nodes of the graph database 106 and use the database determined by the algorithm scanner to form connections between nodes of the graph database 106 (wherein the nodes represent entities). The connections are formed by vertices of the graph database 106. The entities may represent legal (e.g. European Union) and geographic jurisdictions (e.g. US, Canada, Europe), legal content (e.g. EU AI Act) and entities of the information technology estate as determined by the algorithm scanner. Verticies are used to connect related entities as determined by the algorithm scanner. For example, an organisation's systems for managing imports are connected to an importer node, which are connected to a node for the EU AI Act, and this can be used during traversal of the graph database 106 to efficiently and accurately connect the system's which are used to manage imports with the relevant part of the EU AI Act. The graph database 106 can maintain contextual links between content and documents based on the nodes and the relationships between the nodes.

The example given in Figure 2 shows a graph database which relates the content associated with Global AI Regulation in key legal and geographic territories of Canada, United States and Europe. In Figure 2, it shows an expansion of the European regulation (i.e. the regulation which impacts the territory of the EU), in that it shows when the proposed EU AI Act was proposed and when it comes into effect and links the EU AI Act to providers, importers and deployers as examples of implementers of AI activity who could be impacted by the EU AI Act. Further strands from each type of implementer can link to the organisations information technology estate or at least the elements of the algorithm register which were determined by the algorithm scanner. Examples include systems which may be used to manage products, importation, biometrics, surveillance etc.

The node which corresponds to EU AI Act stores and/or links to documents (and other content) which relates to the EU AI Act. The node which corresponds to the proposal of the EU AI Act has the date of proposal as a property. The node which corresponds to the enactment of the EU AI Act has the date of enactment as a property.

That is to say, the graph database 106 stores data and relationships alongside frameworks which provide rules or categories around the data which provide a flexible, conceptual structure to enable deeper insights to be obtained from the available content and also to enable that content to be linked to the information technology estate 104 which is implemented by the organisation.

The platform 100 also provides a vector database 108 which stores the details of documents (and other types of content) which can be useful in providing answers around the information technology estate 104.

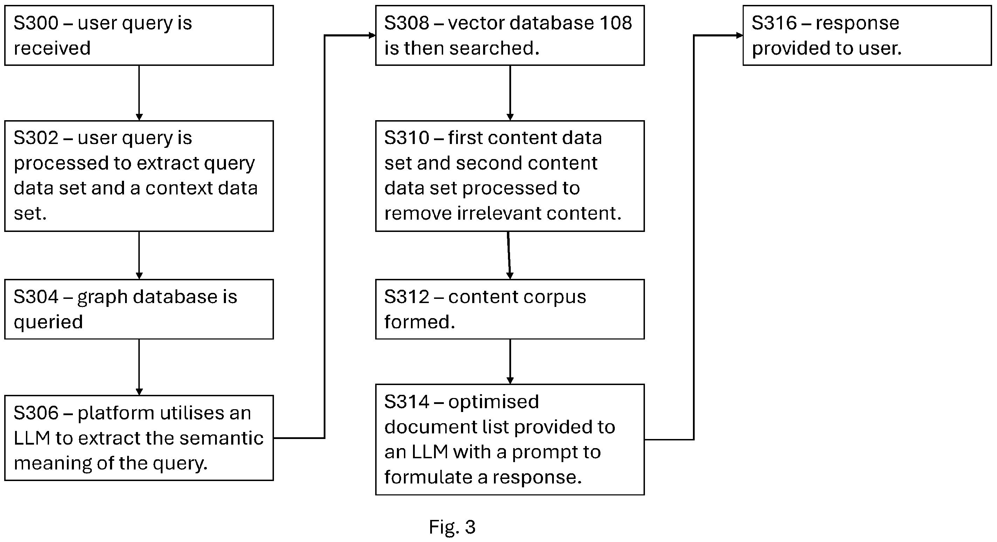

In order to illustrate the remaining functionality of the platform 100, it is better to consider an example where a user query is received at the platform 100 from the client device 102. This series of steps is described with reference to Figure 3.

In a step S300, a user query is received at the platform 100 from the client device 102. The user query may comprise components which identify software which is in the algorithm register (i.e. it relates to ML or LLM), which identify a territory where that software is being used to implement ML or LLM, a user case for that software and an identifier for the end consumer. The user query may be received in natural language through a natural language interface. The user query may also comprise user contextual information such as an algorithm use case, location of deployment, identity or purpose of end user. The user query may relate to regulatory compliance associated with a piece of software implemented by or using the information technology estate 104.

In a step S302, the user query is processed by a user query interface 110 at the platform 100 to extract a query data set and a context data set. This processing is performed by a large language model (LLM) which is trained to recognise information in the query which is relevant to the substance of the query such as, for example, the use case and the end customer and the software. The LLM parses the query to extract data corresponding to these fields to form the query data set. The LLM may also parse the query to extract data corresponding to the context of the query. This may extract data related to the location of deployment and this forms the context data set. The LLM may also extract data related to the legal territory (e.g. the EU) and this may also form part of the context data set. The query data set and the context data set are then used as search terms for the graph database 106.

In parsing the query, prompt engineering techniques may be applied to convert the user query (and both the query data set and the context data set) into a form which may be better processed by the user query interface 110 and specifically the LLM deployed by the user query interface. The prompt engineering techniques may also utilise historical usage of the platform to convert a query into a query which is likely to generate more accurate or useful responses. One simple example may convert a query which asks what the EU AI Act is into one which asks for a copy of the EU AI Act. The LLM may also use the query to generate one or more further queries which may be genarted based on historical queries which have been provided to the platform 100.

The user query interface 110 may perform other forms of processing on the user query. For example, if the user query comprises an image or audio component, image to text or audio to text conversion may be performed prior to further processing by the user query interface 110 in order to extract the query data set and/or the context data set.

In a step S304, the graph database 106 is queried using the query data set and the context data set. Referring back to Figure 2 and the graph database 106 illustrated therein, the platform 100 will traverse the nodes of the graph database 106 to obtain content relevant to the user query by exploring the links between the entities determined from the scan of the information technology estate 104 and the content sources such as, for example, the EU AI Act. The traversal can be implemented using a standard technique for traversing the nodes of a graph database such as, for example the Breadth First search (BFS) or the Depth first search (DFS). The search may start at the top, i.e. Global AI Regulation and then go down to the territory, i.e. Europe, then go down to the enacted node. If that has an enacted date as a property then the search goes to the EU AI Act node where content related to the EU AI Act can be obtained. That is to say, fields of the query data set and context data set are used to identify the content in the graph database 106 which is relevant to the user query.

The context data set may also comprise business use cases, technological intent (e.g. facial recognition, emotional intent) and this may be used to identify use cases which are prohibited by regulations such as the EU AI Act.

EU AI Act is linked to deployers as a further node using an edge which links the EU AI Act with deployers (based on the query data set where use case and end customers are identified which describe that the end customer is a deployer and the use case involves the deployment of AI).

The content which is accessed by visiting the EU AI Act and the deployer use case can then be used to form a first content data set. This may comprise documents which are accessed via these nodes of the graph database 106.

That is to say, the graph database 106 is searched to explore the links between the entities which make up the information technology estate 104 and the relevant third party content sources which can be used to answer questions about those entities and their use.

In summary, the graph database 106 enables us to model the relationship between the information technology estate 104 and the content which is relevant to how the elements of this estate 104 can be used and deployed.

In short, we can imagine numerous "nodes" (such as EU AI Act) which contain references to *specific* documents (and/or portions of documents) about legislation in specific countries and the dates that it comes into effect. There will be further connections between these documents and key entities defined in the legislation which are material for parties implementing AI based solutions. For example, the EU AI Act, makes specific reference to six types of "entity" who is making the AI solution available and they are "Provider", "Deployer", "Distributor", "Importer", "Product manufacturer", and "Authorised representative". These types would become nodes in the graph and similar usage in other legislation would also be connected to these nodes.

That is, when a user poses a question and they have defined their role as being a "Deployer" the Graph is used to get the collection of all documents where this concept has been previously identified. There will be other nodes representing countries where the legislation applies, and this location information is also used. The net result is that the traversal of the graph database 106 surfaces a large pool of contextually relevant documents to answer the user query.

Simultaneously, the query that they have entered is being tested against document fragments (legal and other factually verified documents) to identify potentially relevant material.

In a further step S306, the platform 100 utilises an LLM to extract the semantic meaning of the query. The LLM converts the user query into a vector which contains fields which describe the semantic meaning of the query. This is then used as a search term for the vector database 108. This is step S308. The search is for documents which are closest to the semantic meaning of the query. This obtains documents which are semantically close to the query. This forms a second content data set.

Steps S304 to S308 may be carried out simultaneously.

That is to say, we have a first content data set obtained from the graph database 106 and a second content data set from the vector database 108.

In short, by obtaining the first content data set and the second content data set, the query is processed twice in different ways (one to extract the query data set and the context data set and one where the query is semantically processed) to extract two sets of content. The first extracts policies and regulations which are relevant to AI activities in the respective territory. The second extracts documents which are more specific to the activities of the organisation by processing the query on a semantic level.

This approach also takes as an input the user query and generates further queries which are linked to the original query. This utilises an LLM to expand on the original user query by processing the query to extract information about the user role and the context which has been provided. This helps to identify the broadest set of documents relevant to providing the user user with contextually relevant and accurate answers to queries pertaining to the activities which are implemented using their information technology estate 104.

In a step S310, the first content data set and the second content data set are processed based on the context data set obtained from the query data set to remove content which is contextually irrelevant. This utlises standard document re-ranking techniques to form a content corpus, i.e. all of the content which is identified as being relevant to the context of the query. This is step S312. The content corpus forms an optimised document list. In a step S314, the optimised document list is provided to an LLM with a prompt to formulate a response to the user query provided in step S300. The prompt includes the context data set as an instruction to the LLM to limit the LLM to responses which are relevant based on the context data set. This mitigates against hallucinations from the LLM. The prompt may also include the version of the user query which has been processed by the user query interface 110.

That is to say, the platform 100 provides a response to the user query which is based on a structured corpus of documents which are relevant to the user query. Each query is analysed to determine their semantic meaning and to identify underlying concepts or entities, for example, in the context of AI regulation. The graph database 106 uses its nodes and edges to identify concepts between the information technology estate 104 and the content sources relevant to the entities of the information technology estate and the query provided by the user. The vector database 108 is used to find documents which are semantically similar to the query. The user query is then passed to an LLM to process the query with contextual information returned by the graph database 106 and the vector database 108. The response to the user query is provided based on the context data set. That is to say, the response to the user query is grounded in the content which is obtained from the databases.

The LLM used to generate the response to the user query is regularly assessed based on evaluation sets used to describe the test inputs and outputs provided to an LLM. Evaluation sets are a means of identifying drift in the LLM responses over time and/or when the LLM is upgraded to a newer version This LLM may be distinct from LLMs previously described. For example, the evaluation set can be viewed as a set of questions and answers which are structured as a set of natural language questions and gold standard answers to these questions which are obtained from subject matter experts. The questions may be a typical question a user may ask and the context information which would be associated with the question (e.g. use case, locations etc).

There may be multiple evaluation sets which are relevant to different business domains and use cases. The evaluation sets will be processed through the platform during the training process and the final response that would have been generated will be compared to the gold standard answer and updated based on any differences.

Additional questions and gold standard answers may well be generated based on the evaluation set by augmenting the context around the question to provide a wider set of training data. Gold standard answers can then be provided by subject matter experts.

The response generated by the LLM can then be provided to the client computing device 102. This is step S316.

This approach to generating a response to the user query, a form of retrieval augmented generation, provides a two-stage process by which documents are obtained from the graph database 106 and the vector database 108 and then used with a prompt to a LLM to generate a response to the user query. By utilising the optimised document list, a highly contextual response is generated which is linked to the information technology estate 104. That is to say, when a user query is provided the platform 100 adopts techniques of, for example, natural language processing to extract meaning from a query, retrieve the most relevant information (to the query and the information technology estate 104) from the graph database 106 and associated vector database 108 and generate an answer which is grounded in the source material. As will be described below, this can then be enhanced by iterative query refinement, re-ranking of results and user feedback. This refinement ensures accuracy and relevance in the responses to the user query generated by the platform 100.

Other techniques of prompt generation may be combined with the process described above to improve the prompt generation for the LLM. This may utilise the use of other LLMs to generate prompts, in context learning, directional stimulus programming, tree-of-thought prompting, self-refined prompting or complexity based prompting.

In order to maintain a highly contextual response, the graph database 106 needs to be continually updated so that it can keep providing accurate, correct and up-to-date material. This enables the graph database 106 to be accurate, which we will now describe in more detail.

Response generation may also comprise determining what has been provided to other users with similar contextual information and offering alternative responses (which have been anonymised) to users where contextual similarity is determined.

It is important to maintain the accuracy of the generated responses and to avoid model drift from the LLM and the platform 100.

The platform 100 is therefore configured to deploy a consensus mechanism in order to aid its learning from the responses to user queries. Each response to a user query will be accompanied by a prompt to indicate a user validation of the response. A comment box may also be provided for the user to provide more information. If the user indicates they are happy with the response, then it may be that no further action is taken by the platform 100. However, if the user indicates they are not happy with the response, then the response is counted toward a consensus about the answers on specific topics. That is to say, for example, that if the platform 100 provides answers about the EU AI Act and a consensus is built up that the responses around that topic (generated by the platform 100) are not acceptable to the users (i.e. if more than 10 users over a specific period of time indicate they are not happy with the response) then the comments can be analysed to determine why the responses are not acceptable. This can be used by human experts to make modifications to the databases, i.e. the vector database 108 and the graph database 106, to improve the responses. Natural language processing may be used to analyse the responses.

For example, it may be that the graph database provides content based on the EU AI Act even when the context around the query indicates the query relates to activities in, for example, a Switzerland, i.e. a country which is in geographical Europe (i.e. Europe as a territory) but not impacted by EU regulation. A new node may be added to the graph database 106 for Switzerland and respective nodes and vertices set up to link Switzerland as a territory to the regulations for Switzerland. This means that future user queries with Switzerland as the territory will return more accurate responses. The vector database 108 is also updated to include documents about Switzerland. This can be user by the user query interface during processing of the initial query to ensure that the query data set and/or context data set can be optimised for the query. For example, if the geographic territory identified in the query says Switzerland (or even somewhere in Switzerland such as, for example, Geneva) then the query to the graph database 106 and the vector database 108 is based on Switzerland as a legal and geographic territory and not the EU. More generally, nodes and vertices can be added to the graph database 106 in response to processing of the user responses. The platform 100 may add nodes and vertices which may provide new connections between entities based on the processing. The platform 100 may also be able to search for and obtain content to associate with the added nodes and vertices. Alternatively or additionally, a user and/or organisation may be prompted to add content to be associated with the added nodes and verticies. By associating content with a node it means that, when a search of the database is carried out and that node is traversed, the content associated with that node may be obtained and used as part of graph document list obtained from the search of the graph database 108. Similarly, the vector database 108 can also be updated to include content which may be associated semantically with the added node in that a semantic analysis of the added nodes may be executed and content added which is close in semantic meaning. In the case of Switzerland, this may be content which is semantically close to other documents about Switzerland which can be accessed from the added nodes.

If the consensus mechanism indicates the documents provided in the optimised document list are not what would be expected, the weights which are assigned to documents in order to form the optimised document list may also be adjusted so that the re-ranking process in step S312 is improved so that documents which may previously have attracted a higher weight are given a lower weight if they are contributing to responses which are not accepted by the user.

The nodes and/or vertices of the graph database and the fields of the vector database may also be updated based on historical usage patterns associated with a user/or organisation. A strength parameter which determins the strength of a relationship between nodes may also be modified if there is determined to be an increasing strength of connection between two or more nodes.

The consensus mechanism is important for managing the computational load associated with the graph database 106 and vector database 108. Adding nodes every time a negative reaction appears would make the administration of the databases very computationally expensive over time. The consensus mechanism means the databases are adjusted or amended if they need to be.

The graph database 106 can also comprise nodes which are linked to third party entities such as external advisors. The nodes can link to documents which contain advice around, for example, the use of the EU AI Act for surveillance purposes which has been obtained from an advisor. This means that, if the traversal of the graph database 106, encompasses a visit to such a node then such a document will be fed into the first content list and also fed into the optimised document list in step S314. The processing of the first content list and the second content list may be based on page rank techniques and the number of verticies which feed a node (in the graph database 106) can be used to impact page rank. For a document which relates to advice around the EU AI Act, this may have a large number of vertices which provides a high page rank and mean there is a higher chance of the document being included in the content corpus and being used in the LLM response to generate the response to the user query. That is to say, the number of vertices which feed a node may mean associated documents are given a higher weight in step S314.

The use of a consensus mechanism and the use of documents which the user can upload to the platform (such as advice from third party advisors) enables the graph database 106 and the vector database 108 to be updated over time and improve the responses which can be provided to a user. New connections related to the EU AI Act (i.e. its lack of relevance to Switzerland) may be used to update the platform more generally for other users. Content which is owned by a user can be separated and not used in the response to other user queries. The platform 100 may be partitioned to maintain a separation between data which is obtained from the information technology estate of respective users in order to maintain confidentiality between user queries and user content.

That is to say, the platform 100 can be enhanced by iterative query refinement, re-ranking of results and user feedback. This means the platform 100 is learning from user interactions. The improvements may also be used to improve the responses provided to other user queries. Any personal or commercially sensitive information which is used in the query responses may be removed to ensure it does not contaminate other responses but published documents which are indicated as being inaccurate or out of date, for instance, leading to their re-ranking, may also be marked by the platform 100 which can lead to those documents being re-ranked in other responses where they have been used. User's who received those responses may be prompted to ask if those responses were useful and a new response to their query may be offered.

The platform 100 may be arranged to perform periodic optimisation of stored relationships by storing statistics around the access of those relationships and determining whether the strength parameters need to be amended. The platform 100 may also maintain system performance metrics which determine how quickly or how accurately a response is provided. The platform 100 may also automatically incorporate new regulatory requirements; and/or validate system outputs against known-good states or gold standard responses provided by subject matter experts.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of' and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method of responding to a user query associated with an information technology estate, the method implemented by a processing resource, the method comprising:
providing a user query platform, the user query platform configured to provide a database module which identifies relationships between an information technology estate associated with the user and a content repository which provides access to content;
receiving a user query associated with at least one element of the information technology estate, the user query identifying an activity associated with the at least one element of the information technology estate;
processing the user query to extract a query data set and a context data set;
querying the database module to identify content relevant to the query, wherein the query data set and the context data set are used to search the database to obtain a first content set;
processing the user query to identify the semantic meaning of the query;
identifying a second content set based on the identified semantic meaning of the query;
generating a response based on the first and second content sets, where the response is generated using both user context information and the first and second content sets.

2. A method according to Claim 1, wherein the database comprises a knowledge graph which associates the entities of the information technology estate with external content sources.

3. A method according to Claim 2, wherein the platform is updated based on user responses.

4. A method according to Claim 2 or Claim 3 wherein the platform utilises a consensus mechanism to identify missing or inaccurate information and the platform adds or modifies the database module responsive to the identification of missing or inaccurate information.

5. A method according to Claim 4 wherein adding or modifying the database module responsive to the identification of missing or inaccurate information comprises obtaining content associated with the missing or inaccurate information and associating the content with a missing field or node which is implemented by the database module.

6. A method according to any preceding claim, wherein processing the user query to extract the query data set and the context data set comprises using a large language model to parse the user query.

7. A method according to any preceding claim, wherein the query data set comprises data related to at least one of a:
- use case; or
- element of an information technology estate.

8. A method according to any preceding claim, wherein the context data set comprises data related to at least one of a:
- Geographic territory.
- Legal Territory

9. A method according to any preceding claim, wherein processing the user query to identify the semantic meaning of the query comprises:
- converting the query to a multi-dimensional vector using an LLM.

10. A method according to any preceding claim, wherein the method further comprises:
scanning the information technology estate to identify software or hardware being used to implement trained models;
storing information related to the identified software or hardware in association with the platform.

11. A method according to Claim 9 or Claim 10, wherein scanning the information technology estate to identify software or hardware being used to implement trained models comprises identifying the use of programming languages associated with trained models.

12. A system comprising:
a processing device;
a memory device;
a processing medium configured to implement the method of any one of Claims 1 to 13.

13. A computer readable medium comprising instructions which, when executed by a processing resource, implement the steps of any one of Claims 1 to 13.
